# EUROPÄISCHE PATENTSCHRIFT

(11) **EP 2 971 403 B1**
(45) Veröffentlichungstag und Bekanntmachung des Hinweises auf die Patenterteilung: **15.07.2020**
(21) Anmeldenummer: 14720687.4
(22) Anmeldetag: 12.03.2014
(51) Int. Cl.: E04G 15/06, B28B 23/00

(54) **VORRICHTUNG UND VERFAHREN ZUM HERSTELLEN EINER KANALÖFFNUNG**
DEVICE AND METHOD FOR PRODUCING A CHANNEL OPENING
DISPOSITIF ET PROCÉDÉ POUR RÉALISER UN ORIFICE DE CONDUITE

(30) Priorität: 12.03.2013 CH 614132013
(43) Veröffentlichungstag der Anmeldung: 20.01.2016
(73) Patentinhaber: Zehnder Group International AG, 5722 Gränichen (CH)
(72) Erfinder: HILLER, Andreas, 77972 Mahlberg (DE); WESCHLE, Hans-Peter, 77743 Neuried (DE)
(74) Vertreter: Vesterinen, Jussi Tapio
(86) Internationale Anmeldenummer: PCT/IB2014/000304
(87) Internationale Veröffentlichungsnummer: WO 2014/140734

(56) Entgegenhaltungen:
- JP-A- H08 144 515
- JP-A- S61 146 961
- JP-U- S60 177 611

## Beschreibung

Die Erfindung bezieht sich auf eine Vorrichtung gemäß Anspruch 1 und ein Verfahren gemäß Anspruch 7 zum Herstellen einer Kanalöffnung eines in einem Verlegeraum eines Gebäudes gebildeten Kanalsystems. Der Verlegeraum ist typischerweise eine Wand, ein Boden oder eine Decke, die hergestellt werden, indem man den Verlegeraum mit einem fliessfähigen, aushärtbaren Material füllt, wodurch das Kanalsystem im Innern des Verlegeraums in dem fliessfähigen aushärtbaren Material eingebettet wird. Das Kanalsystem ist typischerweise ein Luftkanalsystem und die Kanalöffnung ein Einlass oder Auslass des Luftkanalsystems.

JP S60 177611 U offenbart eine Vorrichtung gemäß dem Oberbegriff des Anspruchs 1.

Der Erfindung liegt die **Aufgabe** zugrunde, die Herstellung einer derartigen Kanalöffnung zu erleichtern.

Zur **Lösung** dieser Aufgabe stellt die Erfindung eine Vorrichtung I gemäß Anspruch 1 bereit.

Vorzugsweise ermöglichen die erste Endformation des Verbindungsmittels und die komplementäre Formation der Wand bzw. an der Wand des Gehäuses eine formschlüssige Verbindung miteinander und enthalten insbesondere zueinander komplementäre Gewindeabschnitte, die ein Verschrauben der beiden Formationen ermöglichen. Der Gewindeabschnitt an der Wand kann ein mit der Wand einstückiger Gewindeabschnitt sein. Alternativ ist die erste Formation ein Gewindeabschnitt, d.h. ein Innengewinde oder ein Aussengewinde an der Stange, und die zweite Formation ein Gewindeabschnitt, d.h. ein Aussengewinde bzw. ein Innengewinde an einer Mutter.

Vorzugsweise werden die zweite Endformation des Verbindungsmittels und die begrenzende Oberfläche des Begrenzungsmittels durch Mittel aneinander gehalten, welche auf Reibschluss und/oder Formschluss beruhende Kräfte zwischen der zweiten Endformation und dem Begrenzungsmittel bewirken. Dies können Krampen oder Nägel sein, und das Begrenzungsmittel kann eine Holztafel oder eine aus einem synthetischen Polymer gebildete Tafel sein.

Alternativ werden die zweite Endformation des Verbindungsmittels und die begrenzende Oberfläche des Begrenzungsmittels durch Mittel aneinander gehalten, welche magnetische Anziehungskräfte zwischen der zweiten Endformation und dem Begrenzungsmittel bewirken. Dies können ein- und ausschaltbare Dauermagnete in der zweiten Endformation und/oder in dem Begrenzungsmittel sein. Das Begrenzungsmittel kann aus magnetisierbarem Material bestehen. Insbesondere ist es eine Stahltafel, die zumindest teilweise aus Stahl gebildet ist.

Vorzugsweise ist der Öffnungsrand der ersten Öffnung des Gehäuses mit Dichtungsmitteln versehen.

Das Gehäuse der erfindungsgemässen Vorrichtung kann ausser der ersten Öffnung auch mehrere weitere Öffnungen aufweisen, welche jeweils zu einem Rohrende des Kanalsystems komplementär sind, wodurch jeweils ein Rohrende an der jeweiligen weiteren Öffnung, vorzugsweise abdichtend, fixierbar ist und eine Fluidverbindung zwischen dem Innern des Kanalsystems und dem Innern des Gehäuses gebildet wird.

Zur Lösung der eingangs genannten Aufgabe stellt die Erfindung auch ein Verfahren gemäß Anspruch 7 bereit.

Das fliessfähige, aushärtbare Material ist vorzugsweise ein Verbundmaterial mit einer Matrix aus Zement oder Wasserglas, wie z.B. Steine in einer Zementmatrix verteilt (Beton) oder Cellulose, Holzspäne oder Holzmehl in einer Wasserglasmatrix verteilt, oder es ist ein Verbundmaterial mit einer Matrix aus Polymermaterial, wie z.B. Steine in einer Polymermatrix verteilt (Polymerbeton), oder Cellulose, Holzspäne oder Holzmehl in einer Polymermatrix verteilt. Das Matrixmaterial Zement oder Polymer kann auch geschäumt sein, d.h. voneinander getrennte Hohlräume bzw. Gaseinschlüsse enthalten.

Die erfindungsgemässe Vorrichtung und das erfindungsgemässe Verfahren ermöglichen eine einfache praxistaugliche Herstellung einer Kanalöffnung eines Kanalsystems in einer Wand, einem Boden oder einer Decke eines Gebäudes.

Weitere Vorteile, Merkmale und Anwendungsmöglichkeiten der Erfindung ergeben sich aus der nun folgenden, nicht einschränkend aufzufassenden Beschreibung bevorzugter Ausführungsbeispiele der erfindungsgemässen Vorrichtung anhand der Zeichnung, wobei
Fig. 1 eine schematische Schnittansicht einer Ausführung der erfindungsgemässen Vorrichtung zeigt;
Fig. 2 eine vergrösserte schematische Schnittansicht einer weiteren Ausführung der erfindungsgemässen Vorrichtung zeigt;
Fig. 3A und Fig. 3B eine erste Einbausituation (Decke) der erfindungsgemässen Vorrichtung zeigen;
Fig. 4 eine zweite Einbausituation (Wand) der erfindungsgemässen Vorrichtung zeigt;
Fig. 5A und Fig. 5B ein erstes Prinzip (Nägel) bzw. ein zweites Prinzip (Magnete) zur Befestigung der erfindungsgemässen Vorrichtung an einem Begrenzungsmittel (Schaltafel) zeigen;
Fig. 6A bis Fig. 6I eine schematische Darstellung der Abfolge der Schritte eines erfindungsgemässen Verfahrens zeigen;
Fig. 7A bis Fig. 7D verschiedene Ausführungen zueinander komplementärer Formationen zur Befestigung des Verbindungsmittels an einer Wand des Gehäuses der erfindungsgemässen Vorrichtung zeigen;
Fig. 8A und Fig. 8B verschiedene Ausführungen von Verbindungsmitteln der erfindungsgemässen Vorrichtung zeigen;
Fig. 9A bis Fig. 9C verschiedene Ansichten der zweiten Endformation des Verbindungsmittels der erfindungsgemässen Vorrichtung zeigen;
Fig. 10A und Fig. 10B verschiedene Varianten zur Führung/Zentrierung des Gehäuses der Vorrichtung zeigen;
Fig. 11A und Fig. 11B verschiedene Varianten zur Abdichtung des Gehäuses der erfindungsgemässen Vorrichtung zeigen; und
Fig. 12 drei Varianten von Gehäusen der erfindungsgemässen Vorrichtung, eine Variante eines Verbindungsmittels der erfindungsgemässen Vorrichtung sowie ein Befestigungsmittel der erfindungsgemässen Vorrichtung zeigt.

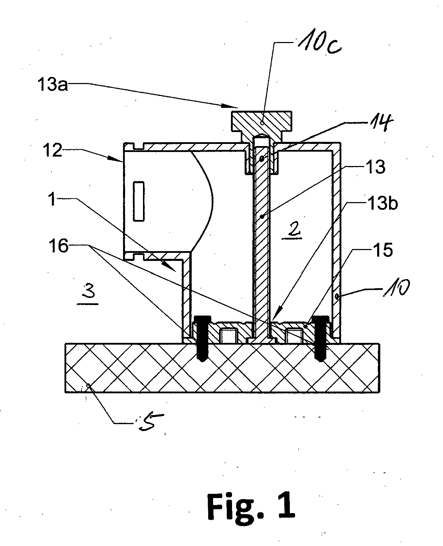

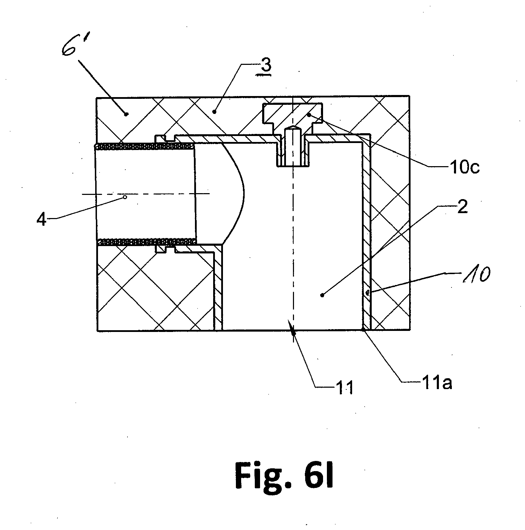

In **Fig. 1** ist eine schematische Schnittansicht einer Ausführung der erfindungsgemässen Vorrichtung 1 gezeigt. Die Vorrichtung 1 enthält ein Gehäuse 10 mit einer ersten Öffnung 11 (am besten in Fig. 6I erkennbar) und einer zweiten Öffnung 12 sowie ein Verbindungsmittel 13. Das Verbindungsmittel 13 in Form einer Stange erstreckt sich durch den die Kanalöffnung 2 bildenden Innenraum des Gehäuses 10 und hat ein erstes Ende 13a sowie ein zweites Ende 13b. Mittels des ersten Endes 13a ist das Verbindungsmittel 13 an einer Wand des Gehäuses 10 befestigt. Mittels des zweiten Endes 13b ist das Verbindungsmittel 13 mit einem Begrenzungsmittel 5 in Form einer Schaltafel verbunden.

Die erfindungsgemässe Vorrichtung 1 dient zum Herstellen einer Kanalöffnung 2 eines in einem Verlegeraum 3 eines Gebäudes, insbesondere in einer Wand, in einem Boden oder in einer Decke, herzustellenden Kanalsystems 4, insbesondere eines Luftkanalsystems. Der Verlegeraum 3 ist durch Begrenzungsmittel 5, insbesondere durch Schaltafeln, begrenzt. Der Verlegeraum 3 enthält in seinem Innern das Kanalsystem 4, das aus aneinandergefügten Rohrabschnitten gebildet sein kann. Der Verlegeraum 3 kann mit einem fliessfähigen, aushärtbaren Material 6 gefüllt werden kann, wodurch das Kanalsystem 4 im Innern des Verlegeraums 3 in dem fliessfähigen aushärtbaren Material 6 eingebettet wird.

Die erfindungsgemässe Vorrichtung 1 dient zum Herstellen der Kanalöffnung 2 und enthält ein Gehäuse 10 mit einer ersten Öffnung 11 und einer zweiten Öffnung 12. Die erste Öffnung 11 hat einen sie umgebenden Öffnungsrand 11a, dessen räumlicher Verlauf bezüglich mindestens eines Teilbereichs einer den Verlegeraum 3 begrenzenden Oberfläche 5a des Begrenzungsmittels 5 komplementär ist, und wobei der Öffnungsrand 11a in diesem Teilbereich diese begrenzende Oberfläche 5a umschliessend berühren kann. Die zweite Öffnung 12 ist zu einem Rohrende des Kanalsystems 4 komplementär ausgebildet, wodurch das Rohrende an der zweiten Öffnung 12 fixierbar ist und eine Fluidverbindung zwischen dem Innern des Kanalsystems 4 und dem Innern des Gehäuses 10 gebildet werden kann. Die Vorrichtung 1 enthält ausserdem ein an dem Begrenzungsmittel 5 und an einer Wand 10b des Gehäuses 10 jeweils im Innern des Gehäuses lösbar fixierbares Verbindungsmittel 13, wodurch das Gehäuse 10 mit dem Begrenzungsmittel 5 lösbar verbunden werden kann.

Das Verbindungsmittel 13 hat ein erstes Ende 13a mit einer ersten Endformation 14, die mit einer komplementären Formation 10c der Wand 10b des Gehäuses 10 bzw. mit einer komplementären Formation 10c an der Wand 10b des Gehäuses 10 in Eingriff gebracht werden kann. Das Verbindungsmittel 13 hat ein zweites Ende 13b mit einer zweiten Endformation 15, die mit der begrenzenden Oberfläche 5a des Begrenzungsmittels 5 in Eingriff gebracht werden kann. Das Verbindungsmittel 13 ist ein sich zwischen seinem ersten Ende 13a und seinem zweiten Ende 13b erstreckendes längliches Gebilde in Form einer Stange.

Die erste Endformation 14 des Verbindungsmittels 13 und die komplementäre Formation 10c der Wand des Gehäuses 10 bzw. an der Wand 10b des Gehäuses 10 ermöglichen eine formschlüssige Verbindung miteinander und besitzen zueinander komplementäre Gewindeabschnitte, die ein Verschrauben der beiden Formationen 14, 10c ermöglichen.

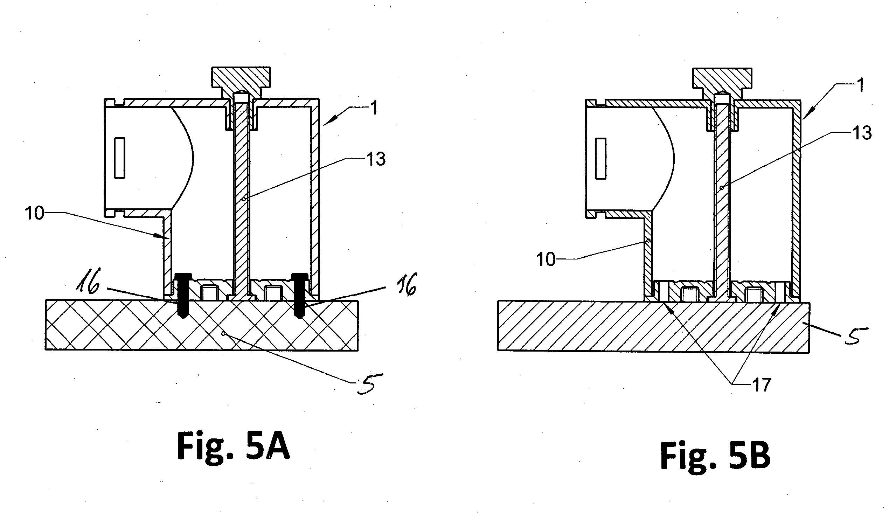

Die zweite Endformation 15 des Verbindungsmittels 13 und die begrenzende Oberfläche 5a des Begrenzungsmittels 5 werden durch Haltemittel 16, wie z.B. Nägel oder Krampen, aneinander gehalten, welche auf Reibschluss und/oder Haftschluss beruhende Kräfte zwischen der zweiten Endformation 15 und dem Begrenzungsmittel 5 bewirken. Alternativ werden die zweite Endformation 15 des Verbindungsmittels 13 und die begrenzende Oberfläche 5a des Begrenzungsmittels 5 durch Haltemittel 17, wie z.B. ein- und ausschaltbare Dauermagnete (siehe Fig. 5B), aneinander gehalten, welche magnetische Anziehungskräfte zwischen der zweiten Endformation 15 und einem magnetischen Begrenzungsmittel 5 (z.B. Schaltafel aus Stahl) bewirken.

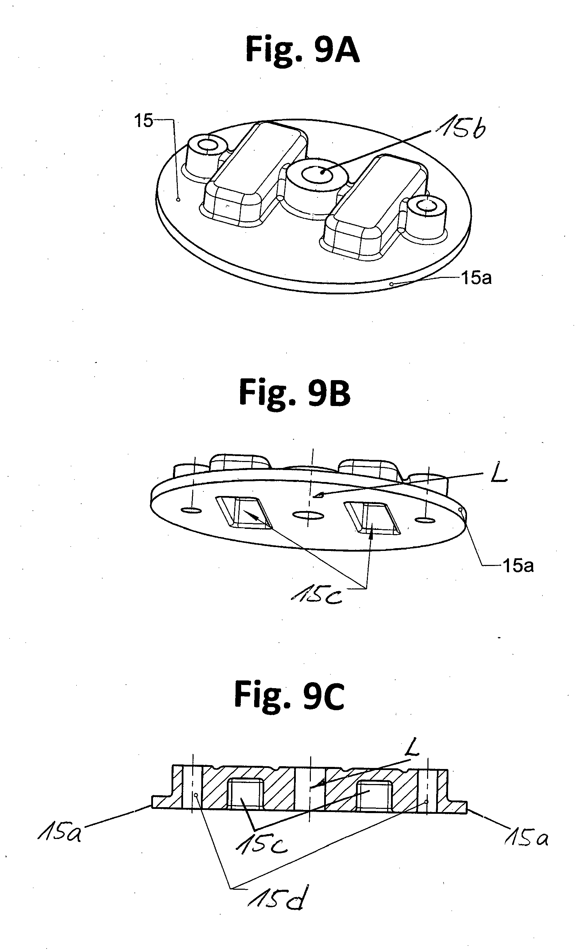

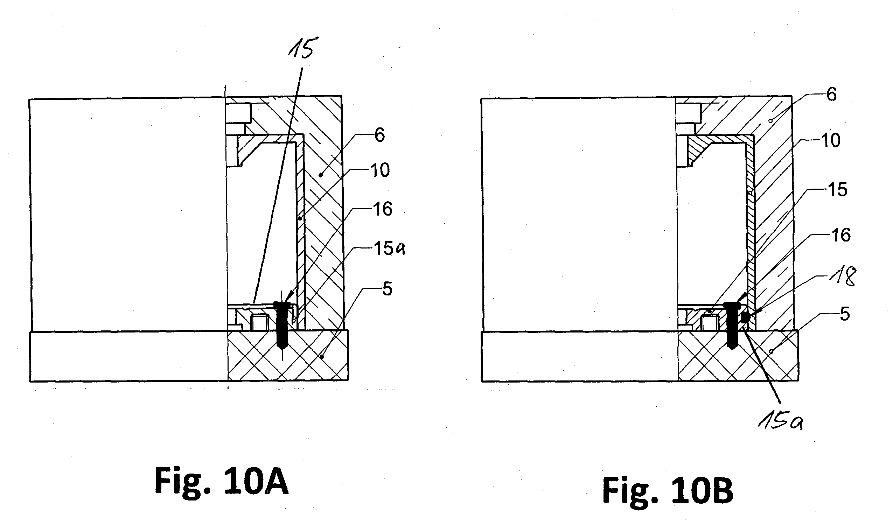

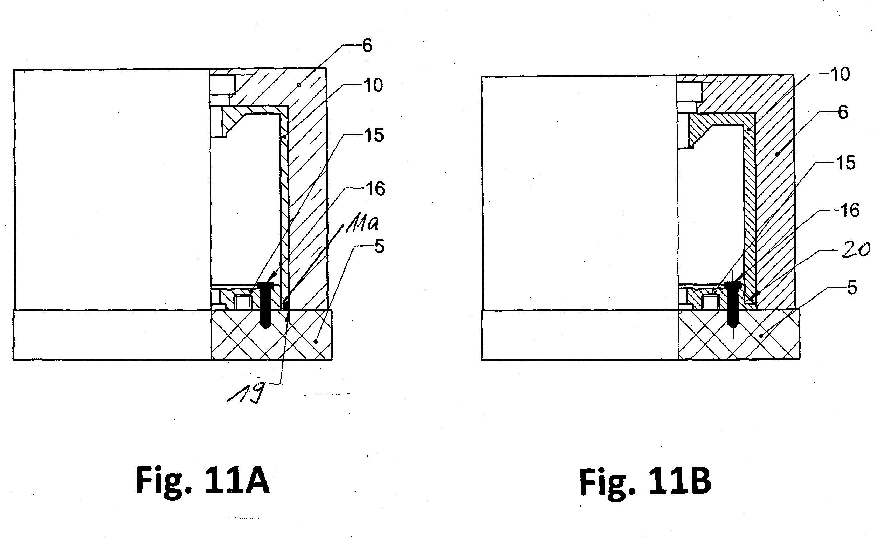

Die zweite Endformation 15 ist ein kreisscheibenartiges bzw. tellerartiges oder runddeckelartiges Gebilde, das mit der Stange einstückig ist oder mit dieser bezüglich der Stangenachse drehfest verbunden ist. Die erste Öffnung 11 des Gehäuses 10 ist eine kreisförmige Öffnung, deren Mittelpunkt auf einer durch die Körperachse der Stange definierten Geraden liegt und wobei der Radius der ersten Öffnung 11 dem Radius des kreisscheibenartigen Gebildes der zweiten Endformation 15 entspricht. Der Öffnungsrand 11a (siehe Fig. 6I) der ersten Öffnung 11 des Gehäuses 10 und/oder der Aussenrand 15a (siehe Fig. 9B) der zweiten Endformation 15 in Form eines kreisscheibenartigen Gebildes sind mit Dichtungsmitteln 18 (Fig. 10B) 19 (Fig. 11A) oder 20 (Fig. 11B) versehen.

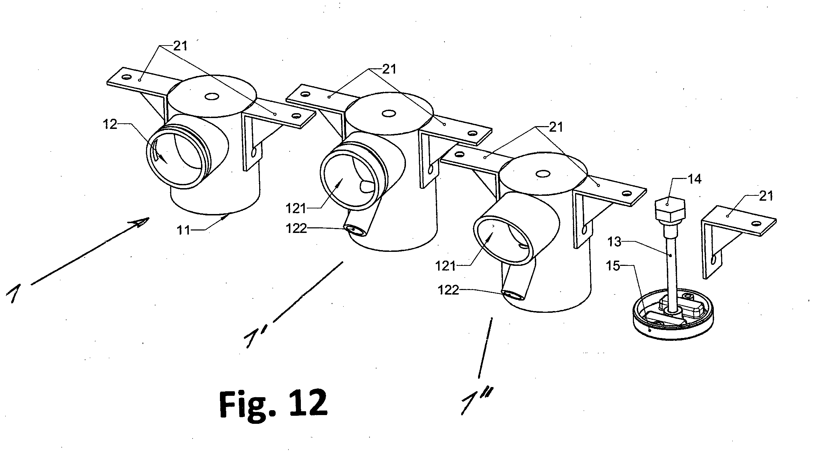

Das Gehäuse 10 der erfindungsgemässen Vorrichtung 1 kann ausser der ersten Öffnung 11 mehrere weitere Öffnungen 121, 122 haben (siehe Fig. 12), welche jeweils zu einem Rohrende des Kanalsystems 4 komplementär sind, wodurch jeweils ein Rohrende an der jeweiligen weiteren Öffnung 121, 122 fixierbar ist und eine Fluidverbindung zwischen dem Innern des Kanalsystems 4 und dem Innern des Gehäuses 10 gebildet wird.

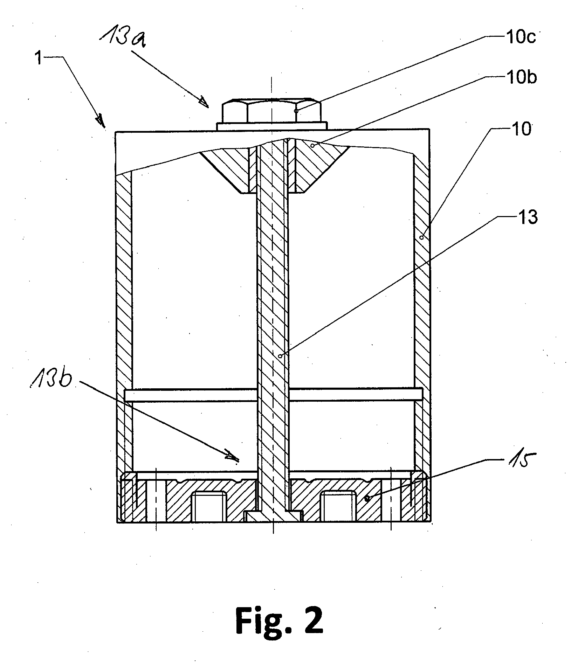

In **Fig. 2** ist eine vergrösserte schematische Schnittansicht einer weiteren Ausführung der erfindungsgemässen Vorrichtung 1 gezeigt. Bei dieser Ausführung ist die Formation 10c als Hutschraube mit Sechskant ausgebildet.

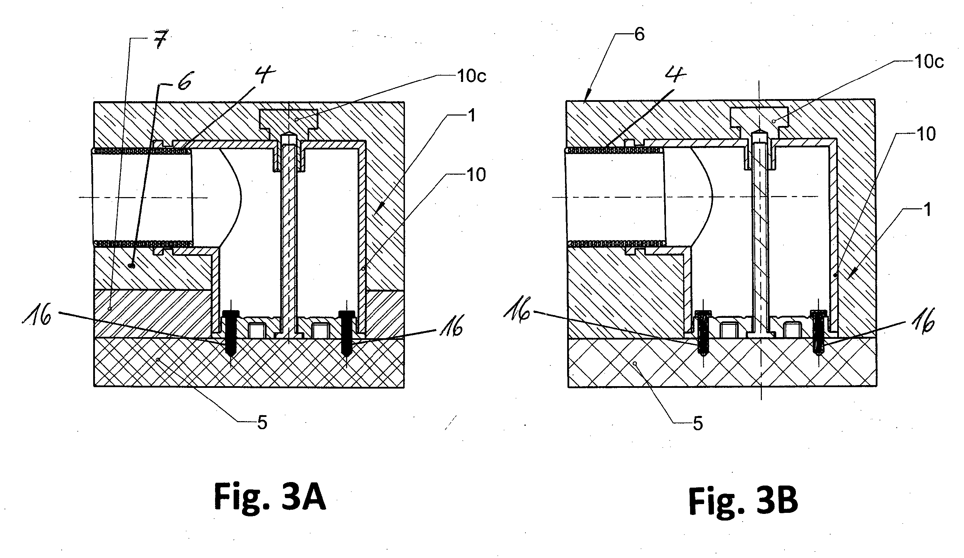

In **Fig. 3A** und **Fig. 3B** sind eine erste Einbausituation (Decke) der erfindungsgemässen Vorrichtung gezeigt. Man erkennt jeweils das Begrenzungsmittel 5 in Form einer Schaltafel sowie das Gehäuse 10 der Vorrichtung 1. Das Begrenzungsmittel 5 ist jeweils eine Schaltafel aus natürlichem Polymermaterial (z.B.) Holz oder einem künstlichen Polymermaterial (z.B. Polyester). Die hier verwendeten Haltemittel 16 (z.B. Nägel) wirken durch Reibschluss.
In **Fig. 3A** ist der Verlegeraum 3 durch ein vorgefertigtes Material 7 in Form einer Filigrandecke (vorgefertigtes Betonelement) und einem darüber gegossenen aushärtbaren Material 6 in Form von Flüssigbeton gefüllt, während der Verlegeraum 3 in **Fig. 3B** nur durch ein aushärtbares Material 6 (Flüssigbeton) gefüllt ist.

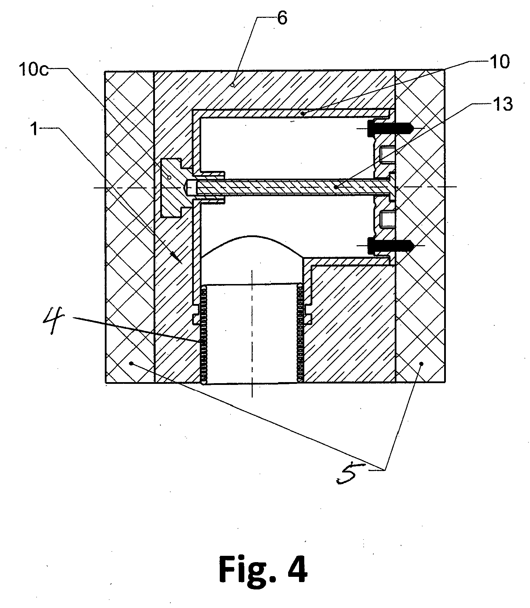

In **Fig. 4** ist eine zweite Einbausituation (Wand) der erfindungsgemässen Vorrichtung gezeigt. Die herzustellende Wand wird hier durch zwei Begrenzungsmittel 5 in Form zweier paralleler vertikaler Schaltafeln definiert. Die Vorrichtung 1 befindet sich hier in einer Position bzw. Orientierung, die bezüglich ihrer Position/Orientierung von Fig. 3A und Fig. 3B um 90° gedreht ist.

In **Fig. 5A** und **Fig. 5B** sind ein erstes Prinzip (Nägel) bzw. ein zweites Prinzip (Magnete) zur Befestigung der erfindungsgemässen Vorrichtung an einem Begrenzungsmittel (Schaltafel) gezeigt. In Fig. 5A werden als Haltemittel 16 reibschlüssig wirkende Nägel verwendet. Hier besteht das Begrenzungsmittel 5 aus einem Polymermaterial, insbesondere Holz oder Polyester. In Fig. 5B werden hingegen als Haltemittel 17 Dauermagnete oder ein- und ausschaltbare Magnete verwendet. Hier besteht das Begrenzungsmittel 5 aus einem magnetischen Material, insbesondere ein ferromagnetisches Metall oder ein Verbundmaterial mit einer Polymermatrix und darin eingebetteten ferromagnetischen Teilchen.

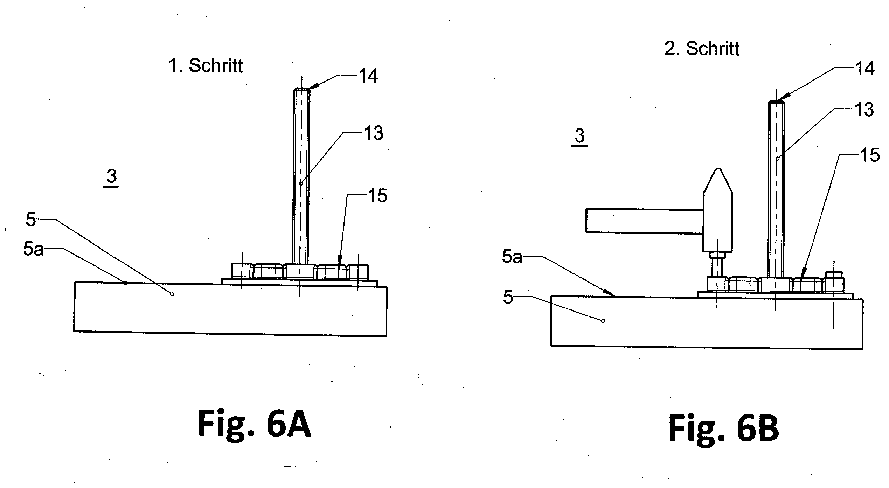

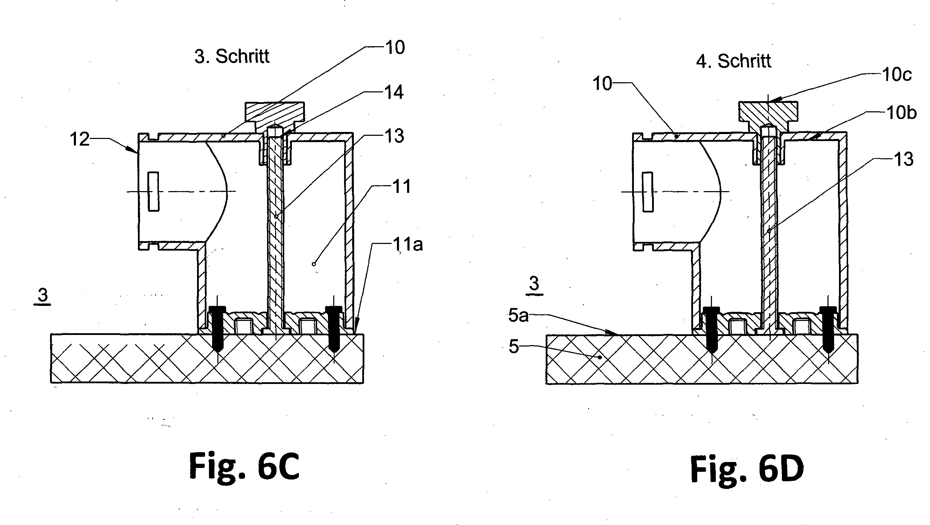

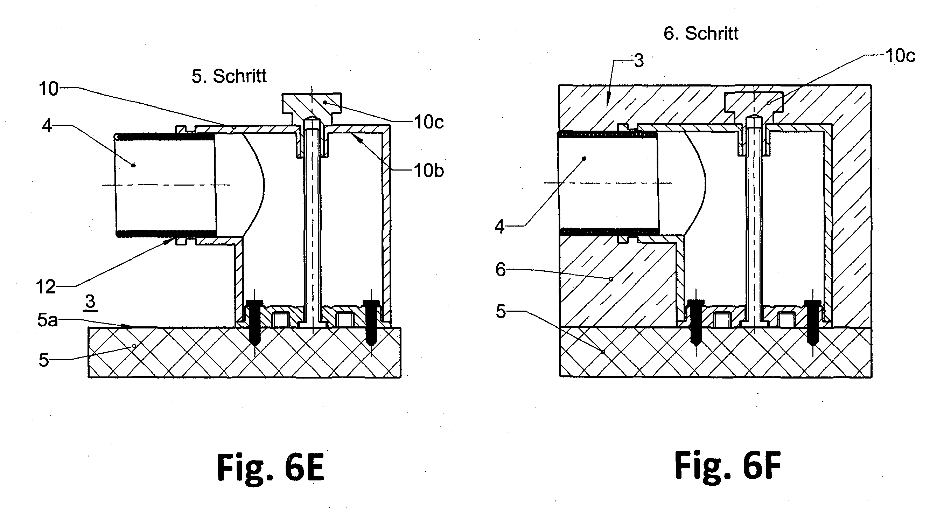

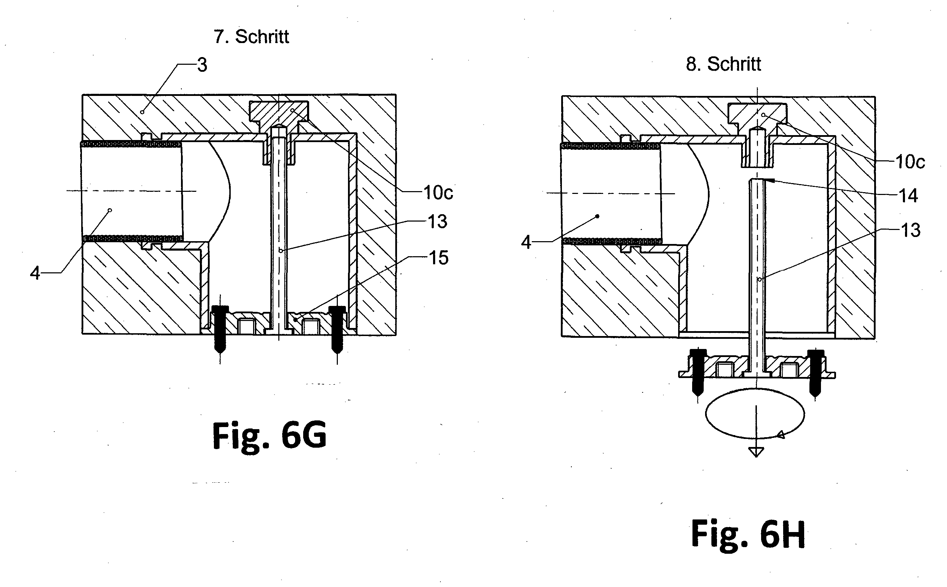

In den **Figuren 6A, 6B****,** **6C, 6D****,** **6E, 6F****,** **6G, 6H** **und** **6I** ist das erfindungsgemässe Verfahren schematisch dargestellt. Das erfindungsgemässe Verfahren dient zum Herstellen einer Kanalöffnung 2 eines in einem Verlegeraum 3 eines Gebäudes 10, insbesondere in einer Wand, in einem Boden oder in einer Decke, herzustellenden Kanalsystems 4, insbesondere eines Luftkanalsystems. Der Verlegeraum 3 wird dabei durch Begrenzungsmittel 5, insbesondere durch Schaltafeln, begrenzt, wobei der Verlegeraum 3 in seinem Innern das Kanalsystem 4 enthält, das aus aneinandergefügten Rohrabschnitten gebildet sein kann. Zur Durchführung des Verfahrens wird die weiter oben beschriebene erfindungsgemässe Vorrichtung 1 verwendet, wobei die folgenden Schritte erfolgen:
a) Positionieren der zweiten Endformation 15 des Verbindungsmittels 13 an der begrenzenden Oberfläche 5a des Begrenzungsmittels 5 (siehe **Fig. 6A**);
b) In-Eingriff-Bringen der zweiten Endformation 15 des Verbindungsmittels 13 mit der begrenzenden Oberfläche 5a des Begrenzungsmittels 5 (siehe **Fig. 6B**);
c) Aufsetzen des Gehäuses 10 über das Verbindungsmittel 13, so dass das Verbindungsmittel 13 in die erste Öffnung 11 des Gehäuses 10 ragt (siehe **Fig. 6C**);
d) In-Eingriff-Bringen der ersten Endformation 14 des Verbindungsmittels 13 mit der komplementären Formation 10c der Wand 10b des Gehäuses 10 bzw. mit der komplementären Formation 10c an der Wand 10b des Gehäuses 10 (siehe **Fig. 6D**);
e) Fixieren eines Rohrendes des Kanalsystems 4 an der zweiten Öffnung 12 des Gehäuses 10 zur Bildung einer Fluidverbindung zwischen dem Innern des Kanalsystems 4 und dem Innern des Gehäuses 10 (siehe **Fig. 6E**);
f) Füllen des Verlegeraums 3 mit einem fliessfähigen, aushärtbaren Material 6 zur Einbettung des Kanalsystem 4 im Innern des Verlegeraums 3 in dem fliessfähigen aushärtbaren Material 6 (siehe **Fig. 6F**);
g) Ausser-Eingriff-Bringen der zweiten Endformation 15 des Verbindungsmittels 13 von der begrenzenden Oberfläche 5a des Begrenzungsmittels 5 (siehe **Fig. 6G**);
h) Ausser-Eingriff-Bringen der ersten Endformation 14 des Verbindungsmittels 13 von der komplementären Formation 10c der Wand 10b des Gehäuses 10 bzw. von der komplementären Formation 10c an der Wand 10b des Gehäuses 10 zur Freilegung der Kanalöffnung 2 des Kanalsystems 4 (siehe **Fig. 6H**).

In **Fig. 6I** ist die fertige Kanalöffnung 2 in einer Schnittansicht gezeigt. Man erkennt die durch die erste Öffnung 11 des Gehäuses 10 gebildete Kanalöffnung 2 sowie einen Teil des Kanalsystems 4, das mit der zweiten Öffnung des Gehäuses 10 verbunden ist. Das Gehäuse 10, das Kanalsystem 4 und die Formation 10c sind von dem ausgehärteten Material 6' umschlossen.

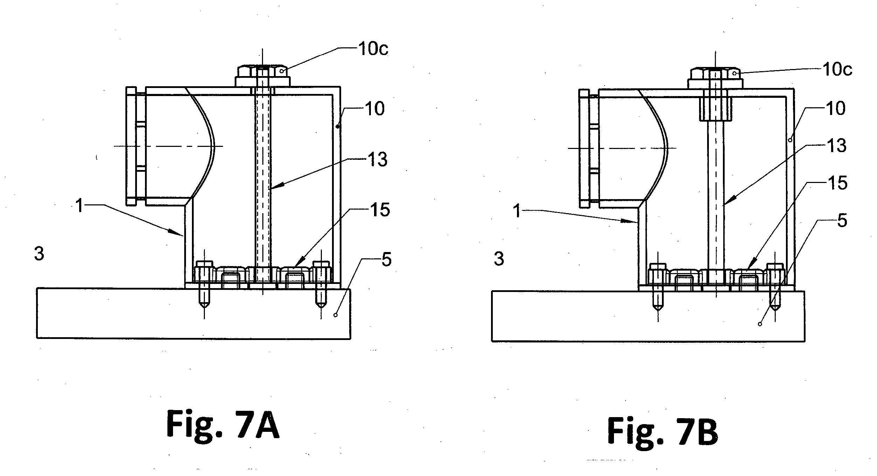

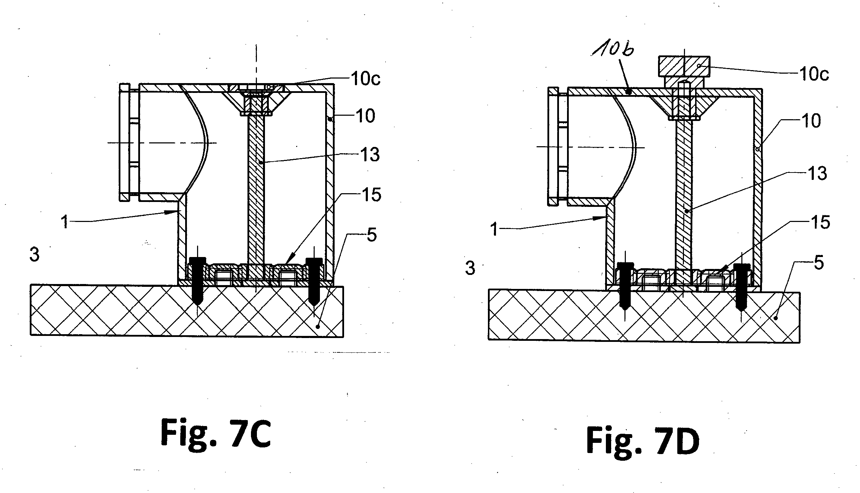

In den **Figuren 7A, 7B****,** **7C und 7D** sind verschiedene Ausführungen komplementärer Formationen 10c zur Befestigung des Verbindungsmittels 13 an einer Wand des Gehäuses 10 der erfindungsgemässen Vorrichtung 1 gezeigt.
In **Fig. 7A** ist die Formation 10c eine Hutmutter mit Sechskant, welche auf die in Form eines Aussengewindes gebildete erste Endformation 14 am ersten Ende 13a des Verbindungsmittels 13 aufgeschraubt ist.
In **Fig. 7B** ist die Formation 10c eine Gewindehülse mit Bund und Sechskant, wobei der Bund der Gewindehülse aussen am Gehäuse 10 anliegt und die Gewindehülse an der Endformation 14 in Anschlag ist.
In **Fig. 7C** ist die Formation 10c eine Gewindehülse mit Bund und Sechskant, welche in einer komplementären Aussparung an der Aussenseite des Gehäuses 10 versenkt ist. wobei der Bund der Gewindehülse in der Aussparung des Gehäuses 10 anliegt und die Gewindehülse an der Endformation 14 in Anschlag ist.
In **Fig. 7D** ist die Formation 10c eine Gewindehülse/Mutter mit Bund und Sechskant, wobei der Bund der Gewindehülse aussen am Gehäuse 10 anliegt und die Gewindehülse an der Endformation 14 in Anschlag ist. Bei dieser Ausführung der Formation 10c gelangt während des Füllens des Verlegeraums 3 mit dem fliessfähigen, aushärtbaren Material 6 (Schritt f) dieses Material 6 (z.B. Flüssigbeton) zwischen den Bund der Gewindehülse und die Aussenseite des Gehäuses 10. Dies hat zur Folge, dass beim Ausser-Eingriff- Bringen der ersten Endformation 14 des Verbindungsmittels 13 von der Formation 10c an der Wand 10b des Gehäuses 10 zur Freilegung der Kanalöffnung 2 des Kanalsystems 4 (Schritt h) die auf das Verbindungsmittel 13 einwirkenden Kräfte und Drehmomente an der in dem ausgehärteten Material 6' fixierten Gewindehülse/Mutter eingeleitet werden. Somit erfolgt keine Aufnahme von Kräften oder Drehmomenten in das Gehäuse 10, das so vor Beschädigungen (Bruch, Verformung) geschützt ist.

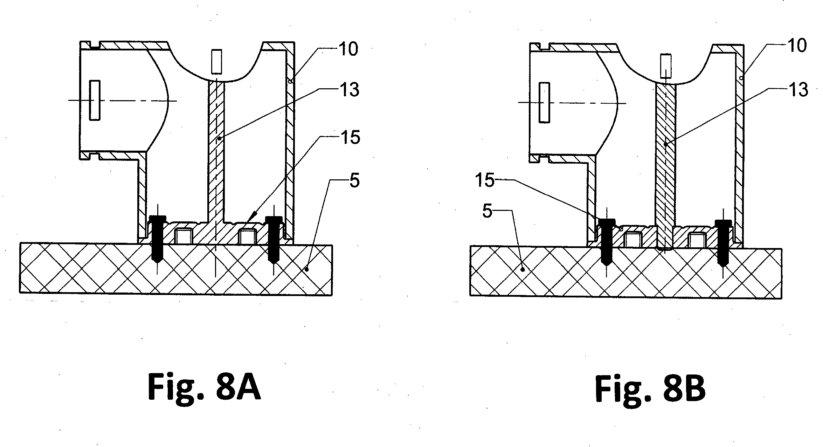

In **Fig. 8A** und **Fig. 8B** sind verschiedene Ausführungen von Verbindungsmitteln 13 der erfindungsgemässen Vorrichtung gezeigt.

In **Fig. 8A** ist die zweite Endformation 15 mit dem Verbindungsmittel 13 einstückig ausgebildet.
In **Fig. 8B** ist die zweite Endformation 15 mit dem Verbindungsmittel 13 mittels einer formschlüssigen und reibschlüssigen Verbindung drehfest und zugfest verbunden. Hierfür eignet sich z.B. eine Schraubverbindung oder eine Mehrkant-Presspassung.
In **Fig. 9A bis Fig. 9C** sind verschiedene Ansichten der zweiten Endformation 15 des Verbindungsmittels 13 der erfindungsgemässen Vorrichtung 1 gezeigt.
In **Fig. 9A** ist eine Perspektivansicht der Endformation 15 von oben gezeigt. Man erkennt den Aussenrand 15a und eine entlang der Drehachse L der Endformation 15 verlaufende axiale Aufnahmeführung 15b für das erste Ende 13a des Verbindungsmittels 13.
In **Fig. 9B** ist eine Perspektivansicht der Endformation 15 von unten gezeigt. Man erkennt den Aussenrand 15a sowie zwei Griffmulden 15b, welche bezüglich der Drehachse L der Endformation 15 diametral zueinander angeordnet sind.
In **Fig. 9C** ist eine Schnittansicht der Endformation 15 an einer durch die Drehachse L verlaufenden Schnittebene gezeigt. Man erkennt zwischen dem Aussenrand 15a und einer jeweiligen Griffmulde 15c jeweils eine periphere Aufnahmeführung 15d für Nägel oder Magnete.
Fig. **10A und Fig. 10B** sind verschiedene Varianten zur Führung/Zentrierung des Gehäuses 10 der Vorrichtung 1 gezeigt.
In **Fig. 10A** ist ein Teil der an einem Begrenzungsmittel 5 befestigten Endformation 15 des Verbindungsmittels 13 gezeigt. Der Aussenrand 15a der tellerartigen Endformation 15 dient zur Führung und Zentrierung des Gehäuses 10, welches mit dem Öffnungsrand 11a seiner ersten Öffnung 11 am Aussenrand 15a anliegt.
In **Fig. 10B** ist ein Teil der an einem Begrenzungsmittel 5 befestigten Endformation 15 des Verbindungsmittels 13 gezeigt. Am Aussenrand 15a der tellerartigen Endformation 15 ist in einer Umfangsnut ein Umfangsring bzw. Dichtungsmittel 18 (z.B. O-Ring) angeordnet. Dies dient ebenfalls zur Führung und Zentrierung des Gehäuses 10.

In **Fig. 11A und Fig. 11B** sind verschiedene Varianten zur Abdichtung des Gehäuses 10 der erfindungsgemässen Vorrichtung 1 gezeigt.
In **Fig. 11A** ist ein Teil der an einem Begrenzungsmittel 5 befestigten Endformation 15 des Verbindungsmittels 13 gezeigt. Am Öffnungsrand 11a der ersten Öffnung 11 des Gehäuses ist ein Dichtungsmittel 19 in Form eines in Umfangsrichtung umlaufenden durchgehenden Dichtungsrings befestigt. Der Dichtungsring kann auch als Profilring ausgelegt sein, der auf den Öffnungsrand 11a aufgestülpt werden kann.
In **Fig. 11B** ist ein Teil der an einem Begrenzungsmittel 5 befestigten Endformation 15 des Verbindungsmittels 13 gezeigt. Am Öffnungsrand 11a der ersten Öffnung 11 des Gehäuses ist ein Dichtungsmittel 20 als Formkontur ausgebildet.
Die Abdichtung verhindert, dass das aushärtbare Material 6 (z.B. Flüssigbeton) oder Bestandteile davon (z.B. Betonwasser) ins Innere des Gehäuses 10 bzw. in die herzustellende Kanalöffnung 2 eindringt.

In **Fig. 12** sind drei Varianten von Gehäusen 10 der erfindungsgemässen Vorrichtung 1, eine Variante eines Verbindungsmittels 13 der erfindungsgemässen Vorrichtung 1 sowie ein Befestigungsmittel 21 der erfindungsgemässen Vorrichtung 1 gezeigt.
Die in Fig. 1 bis Fig. 11 dargestellten erfindungsgemässen Vorrichtungen 1 entsprechen im wesentlichen der in Fig. 12 gezeigten Vorrichtung 1.
Fig. 12 zeigt noch zwei weitere Ausführungen der erfindungsgemässen Vorrichtung, nämlich eine Vorrichtung 1' mit einer ersten Öffnung 11 und zwei weiteren kanalseitigen Öffnungen 121, 122 für Kanäle mit einem kreisrunden Querschnitt sowie eine Vorrichtung 1" mit einer ersten Öffnung 11 und zwei weiteren kanalseitigen Öffnungen 121, 122 für Kanäle mit einem im wesentlichen rechteckförmigen, ovalförmigen oder stadionförmigen Querschnitt.
Fig. 12 zeigt ausserdem das Verbindungsmittel 13 in Form einer Stange mit der ersten Endformation 14 und der zweiten Endformation 15 sowie ein Befestigungsmittel 21 in Form eines Winkels zur Anbringung an einem Gehäuse 10 der erfindungsgemässen Vorrichtung 1. Es können zwei Befestigungsmittel 21 diametral gegenüberliegend an dem Gehäuse 10 befestigt werden. Das Befestigungsmittel 21 kann auch an dem Gehäuse 10 einstückig ausgebidldet sein, insbesondere zwei davon, wie bei den dargestellten Vorrichtungen 1, 1' und 1" gezeigt.

### Bezugszeichenliste

- 1: Vorrichtung
- 1': Vorrichtung
- 1": Vorrichtung
- 2: Kanalöffnung
- 3: Verlegeraum
- 4: Kanalsystem
- 5: Begrenzungsmittel
- 5a: begrenzende Oberfläche
- 6: aushärtbares Material
- 6': ausgehärtetes Material
- 7.....: vorgefertigtes Material
- 10: Gehäuse
- 10b: Wand
- 10c: komplementäre Formation
- 11: erste Öffnung
- 11a: Öffnungsrand
- 12: zweite Öffnung
- 13: Verbindungsmittel
- 13a: erstes Ende
- 13b: zweites Ende
- 14: erste Endformation
- 15: zweite Endformation
- L: Drehachse
- 15a: Aussenrand
- 15b: axiale Aufnahmeführung
- 15c: Griffmulde
- 15d: periphere Aufnahmeführung
- 16: Haltemittel (reibschlüssig und/oder haftschlüssig)
- 17: Haltemittel (magnetisch)
- 18: Dichtungsmittel
- 19: Dichtungsmittel
- 20: Dichtungsmittel
- 21: Befestigungsmittel
- 121: weitere Öffnung
- 122: weitere Öffnung

## Patentansprüche

1. Vorrichtung (1) zum Herstellen einer Kanalöffnung (2) eines in einem Verlegeraum (3) eines Gebäudes, insbesondere in einer Wand, in einem Boden oder in einer Decke, herzustellenden Kanalsystems (4), insbesondere eines Luftkanalsystems, wobei der Verlegeraum durch Begrenzungsmittel (5), insbesondere durch Schaltafeln, begrenzt ist, wobei der Verlegeraum (3) in seinem Innern das Kanalsystem (4) enthält, das aus aneinandergefügten Rohrabschnitten gebildet sein kann; und wobei der Verlegeraum mit einem fliessfähigen, aushärtbaren Material (6) gefüllt werden kann, wodurch das Kanalsystem (4) im Innern des Verlegeraums (3) in dem fliessfähigen aushärtbaren Material (6) eingebettet wird, wobei die Vorrichtung (1) zum Herstellen der Kanalöffnung aufweist:
- ein Gehäuse (10) mit einer ersten Öffnung (11) und mit einer zweiten Öffnung (12);
- wobei die erste Öffnung (11) einen sie umgebenden Öffnungsrand (11a) aufweist, dessen räumlicher Verlauf bezüglich mindestens eines Teilbereichs einer den Verlegeraum begrenzenden Oberfläche (5a) des Begrenzungsmittels (5) komplementär ist und wobei der Öffnungsrand (11a) in diesem Teilbereich diese begrenzende Oberfläche (5a) umschliessend berühren kann;
- wobei die zweite Öffnung (12) zu einem Rohrende des Kanalsystems (4) komplementär ist und das Rohrende an der zweiten Öffnung (12) fixierbar ist, wodurch eine Fluidverbindung zwischen dem Innern des Kanalsystems (4) und dem Innern des Gehäuses (10) gebildet wird; und
- ein an dem Begrenzungsmittel (5) und an einer Wand (10b) des Gehäuses (10) jeweils im Innern des Gehäuses lösbar fixierbares Verbindungsmittel (13), womit das Gehäuse (10) mit dem Begrenzungsmittel (5) lösbar verbunden werden kann, wobei das Verbindungsmittel (13) ein erstes Ende (13a) mit einer ersten Endformation (14) aufweist, die mit einer komplementären Formation (10c) der Wand (10b) des Gehäuses (10) bzw. mit einer komplementären Formation (10c) an der Wand (10b) des Gehäuses (10) in Eingriff gebracht werden kann, und ein zweites Ende (13b) mit einer zweiten Endformation (15) aufweist, die mit der begrenzenden Oberfläche (5a) des Begrenzungsmittels (5) in Eingriff gebracht werden kann, und wobei das Verbindungsmittel (13) ein sich zwischen seinem ersten Ende (13a) und seinem zweiten Ende (13b) erstreckendes längliches Gebilde ist, wobei das längliche Gebilde eine Stange ist, **dadurch gekennzeichnet, dass** die zweite Endformation (15) ein kreisscheibenartiges bzw. tellerartiges oder runddeckelartiges Gebilde ist, dass der Aussenrand (15a) des kreisscheibenartigen Gebildes mit Dichtungsmitteln (18) versehen ist, dass die zweite Endformation (15) mit der Stange einstückig ist oder mit dieser bezüglich der Stangenachse drehfest verbunden ist, und dass die erste Öffnung (11) des Gehäuses (10) eine kreisförmige Öffnung ist, deren Mittelpunkt auf einer durch die Körperachse der Stange definierten Geraden liegt und wobei der Radius der ersten Öffnung (11) dem Radius des kreisscheibenartigen Gebildes der zweiten Endformation (15) entspricht.

2. Vorrichtung (1) nach Anspruch 1, **dadurch gekennzeichnet, dass** die erste Endformation (14) des Verbindungsmittels (13) und die komplementäre Formation (10c) der Wand bzw. an der Wand (10b) des Gehäuses eine formschlüssige Verbindung miteinander ermöglichen und insbesondere zueinander komplementäre Gewindeabschnitte aufweisen, die ein Verschrauben der beiden Formationen (14, 10c) ermöglichen.

3. Vorrichtung (1) nach einem der Ansprüche 1 bis 2, **dadurch gekennzeichnet, dass** die zweite Endformation (15) des Verbindungsmittels (13) und die begrenzende Oberfläche (5a) des Begrenzungsmittels (5) durch Mittel (16) aneinander gehalten werden, welche auf Reibschluss und/oder Haftschluss beruhende Kräfte zwischen der zweiten Endformation (15) und dem Begrenzungsmittel (5) bewirken.

4. Vorrichtung (1) nach einem der Ansprüche 1 bis 3, **dadurch gekennzeichnet, dass** die zweite Endformation (15) des Verbindungsmittels (13) und die begrenzende Oberfläche (5a) des Begrenzungsmittels (5) durch Mittel (17) aneinander gehalten werden, welche magnetische Anziehungskräfte zwischen der zweiten Endformation (15) und dem Begrenzungsmittel (5) bewirken.

5. Vorrichtung (1) nach Anspruch 1, **dadurch gekennzeichnet, dass** der Öffnungsrand (11a) der ersten Öffnung (11) des Gehäuses (10) mit Dichtungsmitteln (18; 19; 20) versehen ist.

6. Vorrichtung (1) nach einem der vorhergehenden Ansprüche, **dadurch gekennzeichnet, dass** das Gehäuse (10) ausser der ersten Öffnung (11) mehrere weitere Öffnungen (121, 122) aufweist, welche jeweils zu einem Rohrende des Kanalsystems (4) komplementär sind, wodurch jeweils ein Rohrende an der jeweiligen weiteren Öffnung (121, 122) fixierbar ist und eine Fluidverbindung zwischen dem Innern des Kanalsystems (4) und dem Innern des Gehäuses (10) gebildet wird.

7. Verfahren zum Herstellen einer Kanalöffnung (2) eines in einem Verlegeraum (3) eines Gebäudes (10), insbesondere in einer Wand, in einem Boden oder in einer Decke, herzustellenden Kanalsystems (4), insbesondere eines Luftkanalsystems, wobei der Verlegeraum (3) durch Begrenzungsmittel (5), insbesondere durch Schaltafeln, begrenzt ist, wobei der Verlegeraum (3) in seinem Innern das Kanalsystem (4) enthält, das aus aneinandergefügten Rohrabschnitten gebildet sein kann, wobei zur Durchführung des Verfahrens eine Vorrichtung (1) gemäss einem der Ansprüche 1 bis 6 verwendet wird und die folgenden Schritte erfolgen:
a) Positionieren der zweiten Endformation (15) des Verbindungsmittels (13) an der begrenzenden Oberfläche (5a) des Begrenzungsmittels (5);
b) In-Eingriff-Bringen der zweiten Endformation (15) des Verbindungsmittels (13) mit der begrenzenden Oberfläche (5a) des Begrenzungsmittels (5);
c) Aufsetzen des Gehäuses (10) über das Verbindungsmittel (13), so dass das Verbindungsmittel (13) in die erste Öffnung (11) des Gehäuses (10) ragt; d) In-Eingriff-Bringen der ersten Endformation (14) des Verbindungsmittels (13) mit der komplementären Formation (10c) der Wand (10b) des Gehäuses (10) bzw. mit der komplementären Formation (10c) an der Wand (10b) des Gehäuses (10);
e) Fixieren eines Rohrendes des Kanalsystems (4) an der zweiten Öffnung (12) des Gehäuses (10) zur Bildung einer Fluidverbindung zwischen dem Innern des Kanalsystems (4) und dem Innern des Gehäuses (10);
f) Füllen des Verlegeraums (3) mit einem fliessfähigen, aushärtbaren Material (6) zur Einbettung des Kanalsystem (4) im Innern des Verlegeraums (3) in dem fliessfähigen aushärtbaren Material (6);
g) Ausser-Eingriff-Bringen der zweiten Endformation (15) des Verbindungsmittels (13) von der begrenzenden Oberfläche (5a) des Begrenzungsmittels (5);
h) Ausser-Eingriff-Bringen der ersten Endformation (14) des Verbindungsmittels (13) von der komplementären Formation (10c) der Wand (10b) des Gehäuses (10) bzw. von der komplementären Formation (10c) an der Wand (10b) des Gehäuses (10) zur Freilegung der Kanalöffnung (2) des Kanalsystems (4).

## Claims

1. A device (1) for producing a channel opening (2) of a channel system (4), in particular of an air channel system, to be produced in an installation space (3) of a building, in particular in a room, in a floor or in a ceiling, wherein the installation space is delimited by delimiting means (5), in particular by formwork panels, wherein the interior of the installation space (3) contains the channel system (4) inside, which can be made of pipe sections that are joined together; and wherein the installation space can be filled with a flowable, curable material (6), whereby the channel system (4) inside the installation space (3) is embedded in the flowable curable material (6), the device (1) for producing the channel opening comprising:
- a housing (10) with a first opening (11) and with a second opening (12);
- the first opening (11) has an opening edge (11a) surrounding it, the spatial profile of which is complementary with respect to at least a partial area of a surface (5a) of the delimiting means (5) delimiting the installation space, and wherein the opening edge (11a) in this partial area can touch the delimiting surface (5a) in a surrounding manner;
- wherein the second opening (12) is complementary to a pipe end of the channel system (4) and the pipe end can be fixed to the second opening (12), whereby a fluid connection between the interior of the channel system (4) and the interior of the housing (10) is formed;
- a connecting means (13) which can be releasably fixed to the delimiting means (5) and to a wall (10b) of the housing (10) in the housing interior in each case, whereby the housing (10) can be releasably connected to the delimiting means (5), wherein the connecting means (13) has a first end (13a) with a first end formation (14) which can be brought into engagement with a complementary formation (10c) of the wall (10b) of the housing (10) or with a complementary formation (10c) on the wall (10b) of the housing (10), and has a second end (13b) with a second end formation (15), which can be brought into engagement with the delimiting surface (5a) of the limiting means (5), and wherein the connecting means (13) is an elongated structure extending between their first end (13a) and its second end (13b), wherein the elongated structure is a rod, **characterised in that** the second end formation (15) is a circular disk-like or plate-like or round lid-like structure, that the outer edge (15a) of the disk-like structure is provided with sealing means (18), that the second end formation (15) is in one piece with the rod or is connected to it in a rotationally fixed manner with respect to the rod axis, and **in that** the first opening (11) of the housing (10) is a circular opening whose centre lies on a straight line defined by the body axis of the rod and wherein the radius of the first opening (11) corresponds to the radius of the circular disk-like structure of the second end formation (15).

2. The device (1) according to claim 1, **characterised in that** the first end formation (14) of the connecting means (13) and the complementary formation (10c) of the wall or on the wall (10b) of the housing enable a positive connection with each other and in particular have mutually complementary threaded sections that enable the two formations (14, 10c) to be screwed together.

3. The device (1) according to any one of claims 1 to 2, **characterised in that** the second end formation (15) of the connecting means (13) and the delimiting surface (5a) of the delimiting means (5) are held together by means (16) which act on forces based on a frictional connection and/or an adhesive connection between the second end formation (15) and the limiting means (5).

4. The device (1) according to any one of claims 1 to 3, **characterised in that** the second end formation (15) of the connecting means (13) and the delimiting surface (5a) of the delimiting means (5) are held together by means (17) which act on magnetic attraction forces between the second end formation (15) and the delimiting means (5).

5. The device (1) according to claim 1, **characterised in that** the opening edge (11a) of the first opening (11) of the housing (10) is provided with sealing means (18; 19; 20).

6. The device (1) according to any one of the preceding claims, **characterised in that** the housing (10), in addition to the first opening (11), has a plurality of further openings (121, 122) which are each complementary to a pipe end of the channel system (4), whereby a respective pipe end can be fixed to the respective further opening (121, 122) and a fluid connection is formed between the interior of the channel system (4) and the interior of the housing (10).

7. A method for producing a channel opening (2) of a channel system (4), in particular of an air channel system, to be produced in an installation space (3) of a building, in particular in a room, in a floor or in a ceiling, wherein the installation space is delimited by delimiting means (5), in particular by formwork panels, wherein the interior of the installation space (3) contains the channel system (4) inside, which can be made of pipe sections that are joined together, wherein a device (1) according to any one of claims 1 to 6 is used for carrying out the method, and the following steps take place:
a) positioning the second end formation (15) of the connecting means (13) on the delimiting surface (5a) of the delimiting means (5);
b) engaging the second end formation (15) of the connecting means (13) with the delimiting surface (5a) of the delimiting means (5);
c) placing the housing (10) over the connecting means (13) so that the connecting means (13) protrudes into the first opening (11) of the housing (10);
d) engaging the first end formation (14) of the connecting means (13) with the complementary formation (10c) of the wall (10b) of the housing (10) or with the complementary formation (10c) on the wall (10b) the housing (10);
e) fixing a pipe end of the channel system (4) to the second opening (12) of the housing (10) to form a fluid connection between the interior of the channel system (4) and the interior of the housing (10);
f) filling the installation space (3) with a flowable, curable material (6) for embedding the channel system (4) inside the installation space (3) in the flowable, curable material (6);
g) disengaging the second end formation (15) of the connecting means (13) from the delimiting surface (5a) of the delimiting means (5);
h) disengaging the first end formation (14) of the connecting means (13) from the complementary formation (10c) of the wall (10b) of the housing (10) or from the complementary formation (10c) on the wall (10b) of the housing (10) to expose the channel opening (2) of the channel system (4).

## Revendications

1. Un dispositif (1) pour réaliser une ouverture de conduite (2) d'un système de conduites (4), en particulier un système de conduites d'air, à réaliser dans un espace d'installation (3) d'un bâtiment, en particulier dans un mur, dans un sol ou dans un plafond, l'espace d'installation étant délimité par des moyens de limitation (5), notamment par des panneaux de coffrage, dans lequel l'espace d'installation (3) contient le système de conduites (4) à l'intérieur, qui peut être formé de tronçons de tuyaux réunis; et dans lequel l'espace d'installation peut être rempli d'un matériau coulant et durcissable (6) qui enrobe le système de conduites (4) à l'intérieur de l'espace d'installation (3), dans lequel le dispositif (1) pour réaliser l'ouverture de conduite comprend :
- un boîtier (10) avec une première ouverture (11) et une deuxième ouverture (12) ;
- dans lequel la première ouverture (11) présente un bord d'ouverture (11a) l'entourant, dont le tracé spatial est complémentaire par rapport à au moins une zone partielle d'une surface (5a) des moyens de limitation (5) délimitant l'espace d'installation, et dans lequel le bord d'ouverture (11a) dans cette zone partielle peut toucher la surface de délimitation (5a) en l'entourant ;
- la deuxième ouverture (12) est complémentaire d'une extrémité de tuyau du système de conduites (4) et l'extrémité de tuyau peut être fixée à la deuxième ouverture (12), permettant de cette manière former une connexion fluidique entre l'intérieur du système de conduites (4) et l'intérieur du boîtier (10) ; et
- un moyen de connexion (13) qui peuvent être fixés de manière amovible aux moyens de limitation (5) et à une paroi (10b) du boîtier (10) à l'intérieur du boîtier, avec lequel le boîtier (10) peut être connecté de manière amovible aux moyens de limitation (5), dans lequel le moyen de connexion (13) ont une première extrémité (13a) avec une première formation d'extrémité (14), qui peut être mise en prise avec une formation complémentaire (10c) de la paroi (10b) du boîtier (10) ou une formation complémentaire (10c) sur la paroi (10b) du boîtier (10), et a une deuxième extrémité (13b) avec une deuxième formation d'extrémité (15), qui peut être mise en prise avec la surface de délimitation (5a) des moyens de limitation (5), et dans lequel le moyen de connexion (13) est une structure allongée s'étendant entre sa première extrémité (13a) et sa deuxième extrémité (13b), dans lequel la structure allongée est une tige, **caractérisé en ce que** la deuxième formation d'extrémité (15) est une structure circulaire en forme de disque ou une structure en forme de plaque ou une structure de couvercle rond qui est solidaire de la tige ou qui y est reliée de manière fixe en rotation par rapport à l'axe de la tige, et **en ce que** la première ouverture (11) du boîtier (10) est une ouverture circulaire dont le centre se situe sur une droite définie par l'axe du corps de la tige, et dans lequel le rayon de la première ouverture (11) correspond au rayon de la structure circulaire en forme de disque de la deuxième formation d'extrémité (15).

2. Le dispositif (1) selon la revendication 1, **caractérisé en ce que** la première formation d'extrémité (14) du moyen de connexion (13) et la formation complémentaire (10c) de la paroi ou sur la paroi (10b) du boîtier permettent une connexion positive entre elles et ont notamment des sections filetées complémentaires qui permettent de visser les deux formations (14, 10c).

3. Le dispositif (1) selon l'une quelconque des revendications 1 à 2, **caractérisé en ce que** la deuxième formation d'extrémité (15) du moyen de connexion (13) et la surface de délimitation (5a) des moyens de limitation (5) sont maintenues ensemble par des moyens (16) agissant sur forces basées sur l'engagement par friction et/ou l'engagement adhésive entre la deuxième formation d'extrémité (15) et les moyens de limitation (5).

4. Le dispositif (1) selon l'une quelconque des revendications 1 à 3, **caractérisé en ce que** la deuxième formation d'extrémité (15) du moyen de connexion (13) et la surface de délimitation (5a) des moyens de limitation (5) sont maintenues ensemble par des moyens (17) agissant sur forces d'attraction magnétiques entre la deuxième formation d'extrémité (15) et les moyens de limitation (5).

5. Le dispositif (1) selon la revendication 1, **caractérisé en ce que** le bord d'ouverture (11a) de la première ouverture (11) du boîtier (10) est pourvu de moyens d'étanchéité (18 ; 19 ; 20).

6. Le dispositif (1) selon l'une quelconque des revendications précédentes, **caractérisé en ce que** le boîtier (10) en plus de la première ouverture (11) présente plusieurs autres ouvertures (121, 122), qui sont chacune complémentaires à une extrémité de tuyau du système de conduites (4), moyennant quoi une extrémité de tuyau peut chacune être fixée à l'autre ouverture respective (121, 122), et une connexion fluidique est formée entre l'intérieur du système de conduites (4) et l'intérieur du boîtier (10).

7. Un procédé pour réaliser une ouverture de conduite (2) d'un système de conduites (4), en particulier un système de conduites d'air, à réaliser dans un espace d'installation (3) d'un bâtiment, en particulier dans un mur, dans un sol ou dans un plafond, l'espace d'installation étant définie par des moyens de limitation (5), notamment par des panneaux de coffrage, dans lequel l'espace d'installation (3) contient le système de conduites (4) à l'intérieur, qui peut être formé de tronçons de tuyaux réunis, dans lequel pour la mise en œuvre du procédé, un dispositif selon l'une quelconque des revendications 1 à 6 est utilisé, et les étapes suivantes ont lieu :
a) le positionnement de la deuxième formation d'extrémité (15) du moyen de connexion (13) sur la surface de délimitation (5a) des moyens de limitation (5) ;
b) l'engagement de la deuxième formation d'extrémité (15) du moyen de connexion (13) avec la surface de délimitation (5a) des moyens de limitation (5) ;
c) le placement du boîtier (10) sur le moyen de connexion (13) de sorte que le moyen de connexion (13) fait saillie dans la première ouverture (11) du boîtier (10) ;
d) l'engagement de la première formation d'extrémité (14) du moyen de connexion (13) avec la formation complémentaire (10c) de la paroi (10b) du boîtier (10) ou avec la formation complémentaire (10c) sur la paroi (10b) du boîtier (10) ;
e) la fixation d'une extrémité de tuyau du système de conduites (4) à la deuxième ouverture (12) du boîtier (10) pour former une connexion fluidique entre l'intérieur du système de conduites (4) et l'intérieur du boîtier (10) ;
f) le remplissage de l'espace d'installation (3) avec un matériau coulant et durcissable (6) pour enrober le système de conduites (4) à l'intérieur de l'espace d'installation (3) dans le matériau coulant et durcissable (6) ;
g) le dégagement de la deuxième formation d'extrémité (15) du moyen de connexion (13) de la surface de délimitation (5a) des moyens de limitation (5) ;
h) le dégagement de la première formation d'extrémité (14) du moyen de connexion (13) de la formation complémentaire (10c) de la paroi (10b) du boîtier (10) ou de la formation complémentaire (10c) sur la paroi (10b) du boîtier (10) pour exposer l'ouverture de conduite (2) du système de conduites (4).
